# EUROPÄISCHE PATENTSCHRIFT

(11) **EP 2 905 494 B1**
(45) Veröffentlichungstag und Bekanntmachung des Hinweises auf die Patenterteilung: **06.11.2019**
(21) Anmeldenummer: 14184152.8
(22) Anmeldetag: 09.09.2014
(51) Int. Cl.: F16D 25/0638, F16D 13/72, F16D 48/06, F16D 25/12

(54) **Kupplungseinrichtung**
Clutch actuator device
Embrayage d'accouplement

(30) Priorität: 17.10.2013 DE 102013017226
(43) Veröffentlichungstag der Anmeldung: 12.08.2015
(73) Patentinhaber: Magna PT B.V. & Co. KG, 74199 Untergruppenbach (DE)
(72) Erfinder: Leitermann, Wulf, 71711 Murr (DE); Gremplini, Hansi, 74379 Ingersheim (DE); Prellezo, Rafael, 71665 Vaihingen/Enz (DE); Nuffer, Cedric, 74199 Unterheinriet (DE)
(74) Vertreter: Rausch, Gabriele

(56) Entgegenhaltungen:
- EP-A1- 0 997 659
- EP-A2- 1 610 018
- DE-T2-602004 004 223
- JP-A- H08 200 393

## Beschreibung

Die vorliegende Erfindung betrifft eine Kupplungseinrichtung, die in einem Antriebsstrang zwischen einem Verbrennungsmotor und einem Handschaltgetriebe eines Kraftfahrzeuges angeordnet ist. Die Erfindung betrifft ferner ein Verfahren zum Betrieb der Kupplungseinrichtung, sowie einen Antriebsstrang eines Kraftfahrzeuges mit der Kupplungseinrichtung und zur Durchführung des Verfahrens zum Betrieb der Kupplungseinrichtung.

Kraftfahrzeuge werden durch einen Verbrennungsmotor angetrieben, welcher über einen Antriebsstrang Kraft auf ein Fahrwerk überträgt. Im Sinne der vorliegenden Erfindung werden als Kraftfahrzeuge solche Kraftfahrzeuge verstanden, die nach der EG-Richtlinie 2007/46/EG vier Räder und eine zulässige Gesamtmasse von 12 Tonnen besitzen. Einer der wichtigsten Bestandteile des Antriebsstranges ist das Getriebe. Für den Einsatz in Kraftfahrzeugen sind heute verschiedene Getriebearten bekannt. Das für Kraftfahrzeuge in Europa, Indien und China am häufigsten gewählte Getriebe ist dabei das Handschaltgetriebe. Im Vergleich zu dem in den Vereinigten Staaten und Japan populären Automatikgetriebe ist das Handschaltgetriebe nicht nur robust und preisgünstig, sondern weist auch einen hohen Wirkungsgrad auf. Robustheit im Sinne der vorliegenden Erfindung bezeichnet eine Unempfindlichkeit gegenüber kurzzeitiger Überlastung, Fehlbedienung, usw. Das Handschaltgetriebe ist preisgünstiger, da seine Herstellkosten lediglich 50% bis 66% derjenigen eines Automatikgetriebes betragen. Beim Handschaltgetriebe stehen dem Fahrer eines Kraftfahrzeuges heutzutage fünf, sechs und mehr Vorwärtsgänge zur Verfügung. Zusätzlich ist ein Rückwärtsgang verfügbar. Hierbei wählt der Fahrer, je nach Geschwindigkeit und Fahrrichtung des Kraftfahrzeuges, mit einem Schalthebel einen Gang aus.

Um von einem Gang in den anderen zu wechseln, muss der Fahrer den Kraftschluss zwischen Verbrennungsmotor und Handschaltgetriebe unterbrechen. Aus diesem Grund ist der Verbrennungsmotor über eine Kupplungseinrichtung mit dem Handschaltgetriebe verbunden. Für Handschaltgetriebe sind Trockenreibkupplungen Stand der Technik. Dabei ist eine Druckplatte drehfest mit dem Verbrennungsmotor und eine Mitnehmerscheibe drehfest mit dem Handschaltgetriebe verbunden sind. Durch Betätigen eines Kupplungspedals stellt der Fahrer selber einen Reibschluss zwischen den Reibelementen Druckplatte und Mitnehmerscheibe her. Eine solche Trockenreibkupplung ist aus der Schrift DE10222730A1 bekannt.

Bei Kraftfahrzeugen mit einem Automatikgetriebe hingegen wird häufig eine Nassreibkupplung verwendet, bei der Lamellen als Reibelemente mit einem Öl beaufschlagt werden. Eine derartige Nassreibkupplung ist aus der Schrift DE102004030660A1 bekannt.

EP 1 610 018 A2 offenbart eine Kupplung in einem mit fluidgefüllten geschlossenen Gehäuse, insbesondere eine nasslaufende Anfahrkupplung, mit Reibelementen, mit einem mit einer um eine Drehachse drehbaren ersten Antriebs- oder Abtriebswelle drehfest verbundenen Betätigungskolben und mit einem mit einer um einer Drehachse drehbaren zweiten Antriebs- oder Abtriebswelle drehfest verbundenen Innenlammellenträger, wobei der Betätigungskolben und der Innenlamellenträger einen Fluidraum ein-schließen. Es sind Mittel vorgesehen, welche den Fluidraum in einen ersten dem Betätigungskolben zugeordneten Fluidteilraum und einen zweiten dem Innenlamellenträger zugeordnetem Fluidteilraum aufteilen.

Aus der JP 2010-270 804 A ist eine Steuerung für eine Kupplung bekannt, wobei die Stellung des Kupplungspedals mit einem Kupplungspedalsensor gemessen wird , dessen Daten für die Ansteuerung des Aktuators für die Kupplung verwendet werden.

Im direkten Vergleich zwischen Trockenreibkupplung und Nassreibkupplung zeichnet sich die Trockenreibkupplung durch Robustheit, einen günstigen Preis und einen hohen Wirkungsgrad aus. Die Nassreibkupplung verfügt hingegen über eine bessere Kühlung der Reibelemente. Bei der Trockenreibkupplung werden die Reibelemente durch Luft und bei der Nassreibkupplung durch Öl gekühlt. Da Luft eine niedrigere Wärmekapazität als Öl besitzt, besteht bei der Trockenreibkupplung die Gefahr, dass bei wiederholter, dauerhafter Überlastung wie beim Stop-and-Go-Betrieb im Verkehrsstau die Reibbeläge aufgrund der hohen thermischen Energieeinträge verschleißen.

Es ist daher eine erste Aufgabe der vorliegenden Erfindung, einen durch hohe thermische Energieeinträge verursachten Verschleiß der Kupplungseinrichtung eines Kraftfahrzeuges mit Handschaltgetriebe zu vermeiden.

Im Sinne der vorliegenden Erfindung bezeichnet die Fahrdynamik eines Kraftfahrzeuges das Verhalten der beschleunigten und unbeschleunigten Massen im Kraftfahrzeug, die zu vom Fahrer als störend empfundenen Schwingungen führen können. Diese Schwingungen beeinflussen das Fahrverhalten des Kraftfahrzeuges wie die Spurtreue und die Beschleunigung. Die Schwingungen beeinflussen aber auch den Fahrkomfort im Kraftfahrzeug, da sich die Schwingungen als Körperschall zur Fahrgastzelle des Kraftfahrzeuges ausbreiten. Schließlich hat auch die Art und Weise der Kupplungsbetätigung durch den Fahrer Einfluss auf die Fahrdynamik. So kann der Fahrer die Reibelemente unnötig lange und häufig im Reibschluss halten, oder er kann den Reibschluss zu schnell bei zu großen Drehzahldifferenzen der Reibelemente herstellen. Eine derart suboptimale Kupplungsbetätigung durch den Fahrer erhöht sowohl den Kraftstoffverbrauch als auch den CO2-Ausstoß und reduziert die Reichweite des Kraftfahrzeuges.

Eine weitere Aufgabe der vorliegenden Erfindung besteht darin, die Fahrdynamik eines Kraftfahrzeuges mit Handschaltgetriebe zu verbessern.

Unter dem benötigten Bauraum eines Antriebsstranges im Sinne der vorliegenden Erfindung wird das Volumen verstanden, dass für den Antriebsstrang benötigt wird, um die Kraft des Verbrennungsmotors auf das Fahrwerk zu übertragen und dabei die Nebenbedingungen wie Betriebssicherheit, Robustheit, Kostengünstigkeit, Fahrdynamik, Wirkungsgrad zu erfüllen. Gerade bei Kraftfahrzeugen mit Front-Quer-Antrieb ist der für den Antriebsstrang verfügbare Bauraum oft sehr knapp bemessen.

Zudem stellt sich die vorliegende Erfindung die Aufgabe, den für einen Antriebstrang benötigten Bauraum eines Kraftfahrzeuges mit Handschaltgetriebe zu reduzieren.

Und die vorliegende Erfindung stellt sich die zusätzliche Aufgabe, die Betriebssicherheit des Kraftfahrzeuges mit Handschaltgetriebe weiter zu verbessern.

Zumindest eine dieser Aufgaben wird erfindungsgemäß durch die Kupplungseinrichtung des unabhängigen Anspruchs 1 gelöst. Die Kupplungseinrichtung ist in einem Antriebsstrang zwischen einem Verbrennungsmotor und einem Handschaltgetriebe eines Kraftfahrzeuges angeordnet; eine Eingangswelle ist drehfest mit dem Verbrennungsmotor verbunden und eine Ausgangswelle ist drehfest mit dem Handschaltgetriebe verbunden; die Eingangswelle ist drehfest mit einem Eingangslamellenträger verbunden und die Ausgangswelle ist drehfest mit einem Ausgangslamellenträger verbunden; der Eingangslamellenträger trägt Eingangslamellen und der Ausgangslamellenträger trägt Ausgangslamellen; und die Eingangslamellen und die Ausgangslamellen sind mit Öl beaufschlagbar und kühlbar. Die Kupplungseinrichtung umfasst ferner eine Federanordnung zum Herstellen oder Aufheben eines Reibschluss der Eingangslamellen und der Ausgangslamellen. eine Pumpenaktuatoranordnung zum Aufheben oder Herstellen eines Reibschlusses der Eingangslamellen und der Ausgangslamellen, einen Kupplungspedalsensor zur Erfassung einer auf ein Kupplungspedal wirkenden Fußkraft, und eine Kupplungssteuerung. Falls von einem Kupplungspedalsensor eine auf ein Kupplungspedal wirkende Fußkraft erfasst wird, wird vom Kupplungspedalsensor ein positives elektrisches Kupplungspedalsignal ausgegeben; welches an die Kupplungssteuerung übermittelt wird. Von der Kupplungssteuerung wird für ein positives elektrisches Kupplungspedalsignal ein negatives elektrisches Aktuatorsignal erzeugt, welches an einen Elektromotor übermittelt wird. Vom Elektromotor wird für ein übermitteltes negatives elektrisches Aktuatorsignal eine Ölpumpe so angetrieben, dass die Eingangslamellen und die Ausgangslamellen nicht im Reibschluss sind.

Durch diese Kupplungseinrichtung wird der Kraftschluss zwischen Verbrennungsmotor und Handschaltgetriebe mittels einer Nassreibkupplung unterbrochen. Da die Ölkühlung der Reibelemente der Nassreibkupplung im Vergleich zur Luftkühlung der Reibelemente bei der Trockenreibkupplung effizienter ist, können die Reibelemente der Nassreibkupplung mit einer im Vergleich zur Trockenreibkupplung geringeren Masse ausgelegt werden, was Gewicht spart. Es hat sich herausgestellt, dass für einen Antriebsstrang mit vorgegebenem Drehmoment von 350 Nm, die Kupplungseinrichtung mit Nassreibkupplung im Vergleich zu einer Kupplungseinrichtung mit Trockenreibkupplung eine um rund 33% reduzierte Masse aufweist, was wiederum die Massenträgheit an der Eingangswelle und an der Ausgangswelle deutlich reduziert und die Fahrdynamik des Kraftfahrzeuges verbessert. Die Nassreibkupplung der Kupplungseinrichtung wird mittels einer Federanordnung und einer Pumpenaktuatoranordnung in offene und geschlossene Positionen bewegt. Die Kupplungseinrichtung kann sowohl als normalerweise offene oder auch als normalerweise geschlossene Nassreibkupplung betrieben werden. Bei einer normalerweise offenen Nassreibkupplung ist der Reibschluss der Eingangslamellen und der Ausgangslamellen durch die Federanordnung aufgehoben und wird durch die eingeschaltete Pumpenaktuatoranordnung erzeugt. Der Fahrer kann im Notfall, bei ausgefallener Pumpenaktuatoranordnung, mit dem Kraftfahrzeug noch in eine sichere Parkposition weiterrollen, da kein Kraftschluss zwischen Verbrennungsmotor und Handschaltgetriebe unterbrochen ist. Bei einer normalerweise geschlossenen Nassreibkupplung wird der Reibschluss der Eingangslamellen und der Ausgangslamellen durch die Federanordnung erzeugt und erst durch die eingeschaltete Pumpenaktuatoranordnung aufgehoben, sie arbeitet aktiv gegen die Federanordnung. Wenn also der Fahrer das Kraftfahrzeug in einer Parkposition geparkt hat und die Pumpenaktuatoranordnung ausgeschaltet ist, so ist das geparkte Kraftfahrzeug durch den Kraftschluss zwischen Verbrennungsmotor und Handschaltgetriebe und bei eingelegter Gangstufe selbsttätig gegen Wegrollen in der Ebene blockiert und der Fahrer muss zur Sicherheit gegen Wegrollen in der Ebene keine Handbremse mehr ziehen und im Kraftfahrzeug ist auch keine Parksperre vorzusehen. Durch diese Maßnahmen wird die Betriebssicherheit des Kraftfahrzeuges auf unterschiedliche Art und Weise verbessert.

Diese Aufgabe wird somit vollkommen gelöst. Vorteilhafte Ausführungen und Weiterbildungen der Erfindung sind in den abhängigen Ansprüchen angegeben.

Vorzugsweise ist die Eingangswelle drehfest mit einer Mitnehmerscheibe verbunden; und der Ausgangslamellenträger ist radial innerhalb der Mitnehmerscheibe angeordnet.

Die Mitnehmerscheibe ist auf der Seite der Kupplungseinrichtung in Richtung eines Zweimassenschwungrades angeordnet. Diese verschachtelte Anordnung von Mitnehmerscheibe und Ausgangslamellenträger ist platzsparend.

Vorzugsweise ist ein radial inneres Ende des Eingangslamellenträgers drehfest mit einer Drehdurchführung verbunden; und die Drehdurchführung ist direkt oberhalb einer gehäusefesten Nabe drehbar gelagert oder die Drehdurchführung ist direkt oberhalb der Ausgangswelle drehbar gelagert.

Durch diese sich mit dem Innenlamellenträger im Betrieb der Kupplungseinrichtung drehende Drehdurchführung wird das Öl zur Beaufschlagung der Eingangslamellen und der Ausgangslamellen in die Kupplungseinrichtung geleitet. Die Drehdurchführung ist entweder direkt oberhalb der gehäusefesten Nabe drehbar gelagert oder sie ist direkt oberhalb der Ausgangswelle gelagert. Durch die minimale Masse der Drehdurchführung wird die Masse der Kupplungseinrichtung reduziert.

Vorzugsweise ist ein radial inneres Ende des Eingangslamellenträgers drehfest mit einer Drehdurchführung verbunden; und der Eingangslamellenträger ist radial innerhalb des Ausgangslamellenträgers angeordnet.

Durch die sich im Betrieb der Kupplungseinrichtung mit dem Innenlamellenträger drehende Drehdurchführung wird Öl zur Kühlung der Eingangslamellen und der Ausgangslamellen in die Kupplungseinrichtung geleitet. Das Öl wird dann durch die Fliehkraft und mittels Öffnungen im Eingangslamellenträger und im Ausgangslamellenträger sowie mittels Nuten in den Eingangslamellen und Ausgangslamellen von radial innen nach radial außen auf die Eingangslamellen und Ausgangslamellen verteilt. Bei stehendem Kraftfahrzeug am Berg und laufendem Verbrennungsmotor dreht sich nur der Eingangslamellenträger mit der Eingangswelle, während sich der Ausgangslamellenträger nicht dreht. Solch eine Betriebssituation entsteht im Berganfahr-Betrieb. Bei einem Ausgangslamellenträger, der radial innerhalb des Eingangslamellenträgers angeordnet ist und sich nicht dreht, blockiert dieser Ausgangslamellenträger die durch die Fliehkraft erzeugte Verteilung des Öls, wodurch die Eingangslamellen Gefahr laufen, aufgrund ungenügender Kühlung zu verschleißen. Durch die Anordnung des Eingangslamellenträgers radial innerhalb des Ausgangslamellenträgers wird ein durch hohe thermische Energieeinträge verursachter Verschleiß der Kupplungseinrichtung vermieden.

Vorzugsweise ist die Eingangswelle drehfest mit einer Mitnehmerscheibe verbunden; die Mitnehmerscheibe ist drehfest mit einem Korb verbunden; und der Ausgangslamellenträger ist radial innerhalb der Mitnehmerscheibe und des Korbs angeordnet.

Der Korb ist auf der Seite der Kupplungseinrichtung in Richtung des Handschaltgetriebes angeordnet. Auch durch diese verschachtelte Anordnung des Ausgangslamellenträgers radial innerhalb von Mitnehmerscheibe und Korb ist platzsparend.

In einem Verfahren zum Betrieb der Kupplungseinrichtung wird der Reibschluss der Eingangslamellen und der Ausgangslamellen mittels einer Federanordnung aufgehoben und mittels einer Pumpenaktuatoranordnung hergestellt; oder der Reibschluss der Eingangslamellen und der Ausgangslamellen wird mittels einer Federanordnung hergestellt und mittels einer Pumpenaktuatoranordnung aufgehoben. Die Kupplungseinrichtung wird mit einem Kupplungspedalsensor betrieben; falls vom Kupplungspedalsensor eine auf ein Kupplungspedal wirkende Fußkraft erfasst wird, wird vom Kupplungspedalsensor ein positives elektrisches Kupplungspedalsignal ausgegeben; das positive elektrische Kupplungspedalsignal wird an eine Kupplungssteuerung übermittelt; von der Kupplungssteuerung wird für ein positives elektrisches Kupplungspedalsignal ein negatives elektrisches Aktuatorsignal erzeugt; das negative elektrische Aktuatorsignal wird an einen Elektromotor übermittelt; und vom Elektromotor wird für ein übermitteltes negatives elektrisches Aktuatorsignal eine Ölpumpe so angetrieben, dass die Eingangslamellen und die Ausgangslamellen nicht im Reibschluss sind.

Durch diese Kupplungseinrichtung wird der Elektromotor mit einem negativen elektrischen Aktuatorsignal angesteuert. Die Kupplungssteuerung erzeugt dieses negative elektrische Aktuatorsignal, falls der Kupplungspedalsensor eine Fußkraft erfasst und ein positives elektrisches Kupplungspedalsignal ausgibt. Es ist somit die Kupplungssteuerung, die für ein positives elektrisches Kupplungspedalsignal den Reibschluss zwischen den Eingangslamellen und den Ausgangslamellen aufhebt, sie kuppelt selbsttätig aus. Für den Fahrer wird die Kupplungsbetätigung somit deutlich vereinfacht, da die Kupplungssteuerung den Reibschluss rascher und wirksamer als der Fahrer aufhebt und die Fahrdynamik des Kraftfahrzeuges verbessert.

Vorzugsweise wird die Kupplungseinrichtung mit einem Kupplungspedalsensor betrieben; falls vom Kupplungspedalsensor keine auf ein Kupplungspedal wirkende Fußkraft erfasst wird, wird vom Kupplungspedalsensor ein negatives elektrisches Kupplungspedalsignal ausgegeben; das negative elektrische Kupplungspedalsignal wird an eine Kupplungssteuerung übermittelt; von der Kupplungssteuerung wird für ein negatives elektrisches Kupplungspedalsignal ein positives elektrisches Aktuatorsignal erzeugt; das positive elektrische Aktuatorsignal wird an einen Elektromotor übermittelt; und vom Elektromotor wird für ein übermitteltes positives elektrisches Aktuatorsignal eine Ölpumpe so angetrieben, dass die Eingangslamellen und die Ausgangslamellen im Reibschluss sind.

Durch diese Kupplungseinrichtung wird ein Elektromotor mit einem positiven elektrischen Aktuatorsignal angesteuert. Umgekehrt zum negativen elektrischen Aktuatorsignal, erzeugt die Kupplungssteuerung dieses positive elektrische Aktuatorsignal für ein vom Kupplungspedalsensor erhaltenes negatives elektrisches Kupplungspedalsignal. Für den Fahrer wird die Kupplungsbetätigung somit deutlich vereinfacht, da er durch Betätigen des Kupplungspedals nicht mehr selber den Reibschluss zwischen den Eingangslamellen und den Ausgangslamellen herstellt, sondern lediglich eine Fußkraft bereitstellt, die vom Kupplungspedalsensor erfasst wird. Es ist somit die Kupplungssteuerung, die für ein positives elektrisches Kupplungspedalsignal den Reibschluss zwischen den Eingangslamellen und den Ausgangslamellen herstellt, sie kuppelt selbsttätig ein. Da die Kupplungssteuerung den Reibschluss rascher und wirksamer als der Fahrer herstellt, wird die Fahrdynamik des Kraftfahrzeuges verbessert.

Vorzugsweise wird die Kupplungseinrichtung mit einem Gaspedalsensor betrieben; falls vom Gaspedalsensor eine auf ein Gaspedal wirkende Fußkraft erfasst wird, wird vom Gaspedalsensor ein positives elektrisches Gaspedalsignal ausgegeben; das positive elektrische Gaspedalsignal wird an eine Kupplungssteuerung übermittelt; von der Kupplungssteuerung wird für ein positives elektrisches Gaspedalsignal ein positives elektrisches Aktuatorsignal erzeugt; das positive elektrische Aktuatorsignal wird an einen Elektromotor übermittelt; und vom Elektromotor wird für ein übermitteltes positives elektrisches Aktuatorsignal eine Ölpumpe so angetrieben, dass die Eingangslamellen und die Ausgangslamellen im Reibschluss sind.

Durch diese Kupplungseinrichtung wird der Elektromotor mit einem positiven elektrischen Aktuatorsignal angesteuert. Das positive elektrische Aktuatorsignal wird von der Kupplungssteuerung für ein von einem Gaspedalsensor erhaltenes positives elektrisches Gaspedalsignal erzeugt. Es ist somit die Kupplungssteuerung, die für ein positives elektrisches Gaspedalsignal den Reibschluss zwischen den Eingangslamellen und den Ausgangslamellen herstellt, sie kuppelt selbsttätig ein. Der Fahrer muss somit lediglich das Gaspedal betätigen und eine Fußkraft bereitstellen, die vom Kupplungspedalsensor erfasst wird, und die Kupplungssteuerung stellt den Reibschluss zwischen den Eingangslamellen und den Ausgangslamellen her, sie kuppelt selbsttätig ein. Da die Kupplungssteuerung den Reibschluss rascher und wirksamer als der Fahrer herstellt, wird die Fahrdynamik des Kraftfahrzeuges verbessert.

Vorzugsweise wird, falls eine niedrige Gangstufe des Handschaltgetriebes eingelegt ist, für ein positives elektrisches Aktuatorsignal eine Ölpumpe so angetrieben, dass die Eingangslamellen und die Ausgangslamellen im Reibschluss sind und ein Kraftschluss zwischen Verbrennungsmotor und Handschaltgetriebe gebildet wird und das Kraftfahrzeug anfährt.

Somit wird falls eine niedrige Gangstufe des Handschaltgetriebes eingelegt ist und das Gaspedal niedergedrückt wird, das Kraftfahrzeug selbsttätig angefahren. Es ist die Kupplungssteuerung, die für ein positives elektrisches Gaspedalsignal den Reibschluss zwischen den Eingangslamellen und den Ausgangslamellen selbsttätig herstellt und so den Kraftschluss zwischen Verbrennungsmotor und Handschaltgetriebe bildet und das Kraftfahrzeug selbsttätig anfährt. Unter einer niedrigen Gangstufe wird im Sinne der Erfindung eine solche niedrige Gangstufe des Kraftfahrzeuges verstanden, in der das Kraftfahrzeug aus dem Stand anfahren kann, normalerweise sind das die niedrigste und die zweitniedrigste Gangstufe. Dies ist gerade im Stop-and-Go-Betrieb im Verkehrsstau von Vorteil, da der Fahrer nun nicht mehr das Kupplungspedal betätigen muss, was sowohl den Kraftstoffverbrauch als auch den CO2-Ausstoß reduziert und die Reichweite des Kraftfahrzeuges erhöht, was wiederum die Fahrdynamik des Kraftfahrzeuges verbessert.

Vorzugsweise wird die Kupplungseinrichtung mit einem Gaspedalsensor betrieben; falls vom Gaspedalsensor keine auf ein Gaspedal wirkende Fußkraft erfasst wird, wird vom Gaspedalsensor ein negatives elektrisches Gaspedalsignal ausgegeben; das negative elektrische Gaspedalsignal wird an eine Kupplungssteuerung übermittelt; von der Kupplungssteuerung wird für ein negatives elektrisches Gaspedalsignal ein negatives elektrisches Aktuatorsignal erzeugt; das negative elektrische Aktuatorsignal wird an einen Elektromotor übermittelt; und vom Elektromotor wird für ein übermitteltes negatives elektrisches Aktuatorsignal eine Ölpumpe so angetrieben, dass die Eingangslamellen und die Ausgangslamellen nicht im Reibschluss sind.

Durch diese Kupplungseinrichtung wird der Elektromotor mit einem negativen elektrischen Aktuatorsignal angesteuert. Das negative elektrische Aktuatorsignal wird von der Kupplungssteuerung für ein von einem Gaspedalsensor erhaltenes negatives elektrisches Gaspedalsignal erzeugt. Es ist somit die Kupplungssteuerung, die für ein negatives elektrisches Gaspedalsignal den Reibschluss zwischen den Eingangslamellen und den Ausgangslamellen aufhebt.

Vorzugsweise wird, falls eine Gangstufe des Handschaltgetriebes eingelegt ist, für ein negatives elektrisches Aktuatorsignal die Ölpumpe so angetrieben, dass die Eingangslamellen und die Ausgangslamellen nicht im Reibschluss sind und ein Kraftschluss zwischen Verbrennungsmotor und Handschaltgetriebe unterbrochen wird und das Kraftfahrzeug segelt.

Somit segelt, falls eine Gangstufe des Handschaltgetriebes gelegt ist und das Gaspedal nicht betätigt wird, das Kraftfahrzeug im Leerlauf. Es ist die Kupplungssteuerung, die für ein negatives elektrisches Gaspedalsignal den Reibschluss zwischen den Eingangslamellen und den Ausgangslamellen selbsttätig aufhebt und so den Kraftschluss zwischen Verbrennungsmotor und Handschaltgetriebe unterbricht und das Kraftfahrzeug im Leerlauf segelt. Beim Segelbetrieb ist der Verbrennungsmotor vom Antriebsstrang abgekoppelt, somit dreht nur die Eingangswelle, was den Wirkungsgrad des Kraftfahrzeuges erhöht, eine Maßnahme durch welche der Kraftstoffverbrauch und der CO2-Ausstoß reduziert und die Reichweite des Kraftfahrzeuges erhöht werden, durch all dies wird die Fahrdynamik des Kraftfahrzeuges verbessert.

Vorzugsweise werden die Eingangslamellen und die Ausgangslamellen mit einer vordefinierten Menge Öl beaufschlagt; über die Beaufschlagung der Eingangslamellen und der Ausgangslamellen mit einer vordefinierten Menge Öl werden Schlupfdrehzahlen für einen Schlupf zwischen den Eingangslamellen und den Ausgangslamellen eingestellt; und mittels der schlupfenden Eingangslamellen und Ausgangslamellen werden Drehschwingungen isoliert.

Durch diesen schlupfenden Betrieb der Kupplungseinrichtung werden Drehschwingungen, die von Drehungleichförmigkeiten des Verbrennungsmotors herrühren und die sich über den Antriebsstrang zur Fahrgastzelle des Kraftfahrzeuges ausbreiten und dort vom Fahrer als störend empfunden werden, aktiv isolieren, was die Fahrdynamik des Kraftfahrzeuges verbessert. Diese aktive Isolierung der Drehschwingungen erfolgt durch die Kupplungssteuerung, die die Eingangslamellen und die Ausgangslamellen mit einer vordefinierten Menge Öl beaufschlagt. Bei Kraftfahrzeugen mit Handschaltgetriebe und Trockenreibkupplung ist ein solcher schlupfender Betrieb der Trockenreibkupplung nicht möglich, da eine entsprechende Kupplungssteuerung nicht vorhanden ist.

Die vorstehend genannten und die nachstehend noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Die Erfindung wird in den Figuren beispielhaft dargestellt und in der Beschreibung der Figuren näher erläutert. Es zeigen:
- Fig. 1:: eine schematische Darstellung eines Antriebsstanges eines Kraftfahrzeuges mit einer Ausführungsform einer Kupplungseinrichtung nach einer der Fig. 2 bis 6;
- Fig. 2:: einen Teil einer ersten Ausführungsform einer Kupplungseinrichtung;
- Fig. 3:: einen Teil einer zweiten Ausführungsform einer Kupplungseinrichtung;
- Fig. 4:: einen Teil einer dritten Ausführungsform einer Kupplungseinrichtung;
- Fig. 5:: einen Teil einer vierten Ausführungsform einer Kupplungseinrichtung;
- Fig. 6:: einen Teil einer fünften Ausführungsform einer Kupplungseinrichtung;
- Fig. 7:: eine Ansicht eines Teils des Antriebsstanges eines Kraftfahrzeuges mit einer Ausführungsform der Kupplungseinrichtung nach einer der Fig. 2 bis 6; und
- Fig. 8:: eine schematische Darstellung einer Pumpenaktuatoranordnung einer Kupplungseinrichtung nach einer der Fig. 2 bis 6.

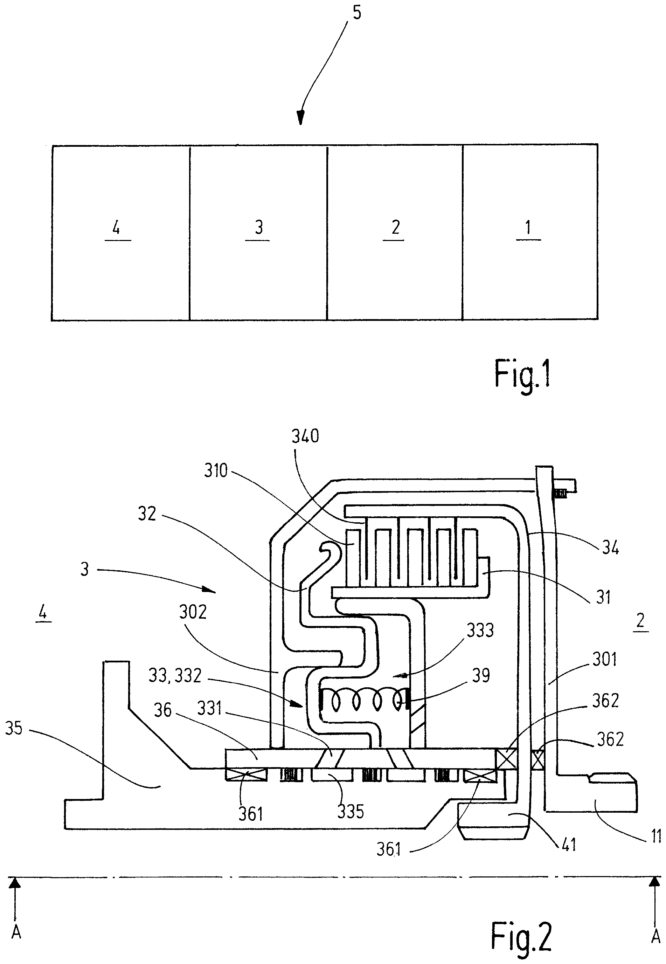

In der nachfolgenden Beschreibung der Figuren 1 bis 8 werden ähnliche Merkmale mit den gleichen Bezugszeichen versehen. Sollten gravierende Unterschiede zwischen einzelnen Merkmalen vorhanden sein, wird explizit hingewiesen werden.

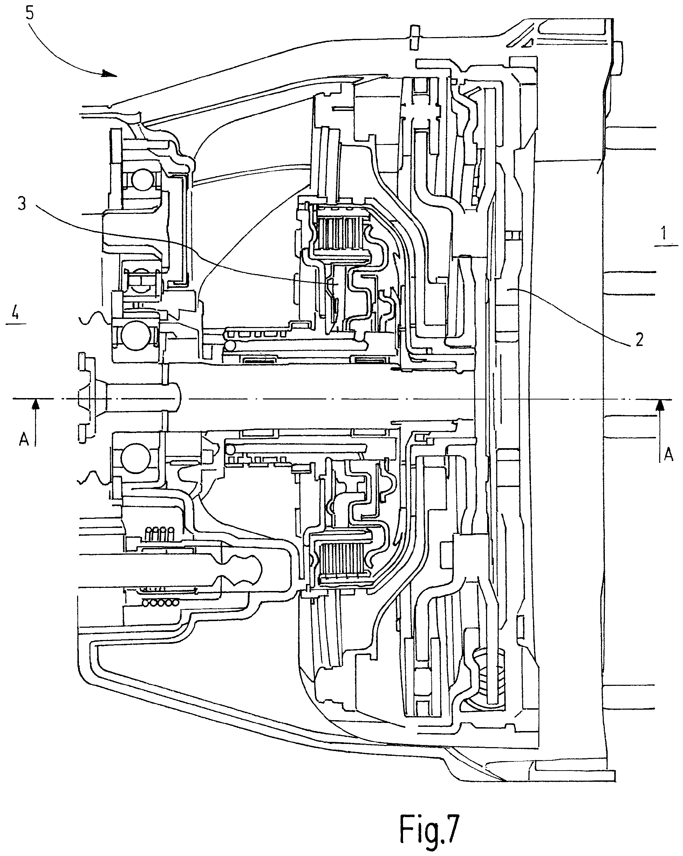

Fig. 1 zeigt eine schematische Darstellung eines Antriebsstanges 5 eines Kraftfahrzeuges mit einem Verbrennungsmotor 1, einem Zweimassenschwungrad 2, einer Kupplungseinrichtung 3 und einem Handschaltgetriebe 4. Der Verbrennungsmotor 1 ist über eine Kurbelwelle oder Eingangswelle 11 drehfest mit dem Zweimassenschwungrad 2 und der Kupplungseinrichtung 3 verbunden. Das Zweimassenschwungrad 2 reduziert Drehschwingungen, die von Drehungleichförmigkeiten des Verbrennungsmotors 1 herrühren und die sich über den Antriebsstrang 5 zur Fahrgastzelle des Kraftfahrzeuges ausbreiten und dort vom Fahrer als störend empfunden werden. Die Kupplungseinrichtung 3 ist über eine Ausgangswelle 41 drehfest mit dem Handschaltgetriebe 4 verbunden. Fig. 7 zeigt einen Teil des Antriebsstrangs 5 in Ansicht. Bei Kenntnis der vorliegenden Erfindung kann der Fachmann anstatt eines Verbrennungsmotors auch einen Elektromotor oder einen Hybridantrieb verwenden.

Je nach vorgegebenem Drehmoment des Antriebsstranges 5, sind der Verbrennungsmotor 1, das Zweimassenschwungrad 2, die Kupplungseinrichtung 3 und das Handschaltgetriebe 4 mit unterschiedlicher Masse und unterschiedlichem Bauraum ausgelegt. Ein Verbrennungsmotor 1 mit 750Nm Drehmoment ist somit von der Masse her schwerer und vom Bauraum her größer als ein Verbrennungsmotor 1 mit 150Nm Drehmoment, das gleiche gilt auch für das Zweimassenschwungrad 2, die Kupplungseinrichtung 3 und das Handschaltgetriebe 4, auch hier sind ein Zweimassenschwungrad 2, eine Kupplungseinrichtung 3 oder ein Handschaltgetriebe 4 mit 750Nm Drehmoment von der Masse her schwerer und vom Bauraum her größer als ein Zweimassenschwungrad 2, eine Kupplungseinrichtung 3 oder ein Handschaltgetriebe 4 mit 150Nm Drehmoment. Wenn man nun für ein vorgegebenes Drehmoment eine Kupplungseinrichtung mit Trockenreibkupplung mit einer Kupplungseinrichtung mit Nassreibkupplung vergleicht, so ist die Kupplungseinrichtung mit Trockenreibkupplung von der Masse her schwerer und vom Bauraum her größer als eine Kupplungseinrichtung mit Nassreibkupplung.

Für einen Antriebsstrang 5 mit vorgegebenem Drehmoment von 350Nm wiegt eine Kupplungseinrichtung mit Trockenreibkupplung rund 6kg, während die Kupplungseinrichtung 3 mit Nassreibkupplung nur rund 4kg wiegt, die Reduzierung der Masse der Kupplungseinrichtung 3 beträgt also rund 33%. Für diesen Antriebsstrang 5 beträgt die Massenträgheit an der Eingangswelle 11 der Kupplungseinrichtung 3 mit Nassreibkupplung rund 10gm², während die Massenträgheit an der Eingangswelle einer Kupplungseinrichtung mit Trockenreibkupplung rund 75gm² beträgt, die Reduzierung der Massenträgheit an der Eingangswelle 11 beträgt rund 85%. Für diesen Antriebsstrang 5 beträgt die Massenträgheit an der Ausgangswelle 41 der Kupplungseinrichtung 3 mit Nassreibkupplung rund 2,6gm², während die Massenträgheit an der Ausgangswelle einer Kupplungseinrichtung mit Trockenreibkupplung rund 6,4gm² beträgt, die Reduzierung der Massenträgheit an der Ausgangswelle 41 beträgt rund 60%. Für diesen Antriebsstrang 5 beträgt die Summe der Massenträgheit von Eingangswelle 11 und Ausgangswelle 41 der Kupplungseinrichtung 3 mit Nassreibkupplung rund 13gm², während die Summe der Massenträgheit von Eingangswelle und Ausgangswelle einer Kupplungseinrichtung mit Trockenreibkupplung rund 82gm² beträgt, die Reduzierung der Summe der Massenträgheit von Eingangswelle 11 und Ausgangswelle 41 beträgt rund 85%. Für diesen Antriebsstrang 5 weist der Bauraum in radialer Richtung zur Drehachse A der Kupplungseinrichtung 3 mit Nassreibkupplung einen Durchmesser von rund 180mm, während der Bauraum in radialer Richtung zur Drehachse einer Kupplungseinrichtung mit Trockenreibkupplung einen Durchmesser von rund 240mm aufweist, die Reduzierung des Bauraumes in radialer Richtung zur Drehachse beträgt rund 25%. Für diesen Antriebsstrang 5 beträgt der Bauraum in axialer Richtung zur Drehachse A der Kupplungseinrichtung 3 mit Nassreibkupplung rund 100mm, während der Bauraum in axialer Richtung zur Drehachse einer Kupplungseinrichtung mit Trockenreibkupplung rund 120mm beträgt, die Reduzierung des Bauraumes in axialer Richtung zur Drehachse beträgt rund 20%. Im Sinne der vorliegenden Erfindung sind die Prozentangaben auf 5% gerundet.

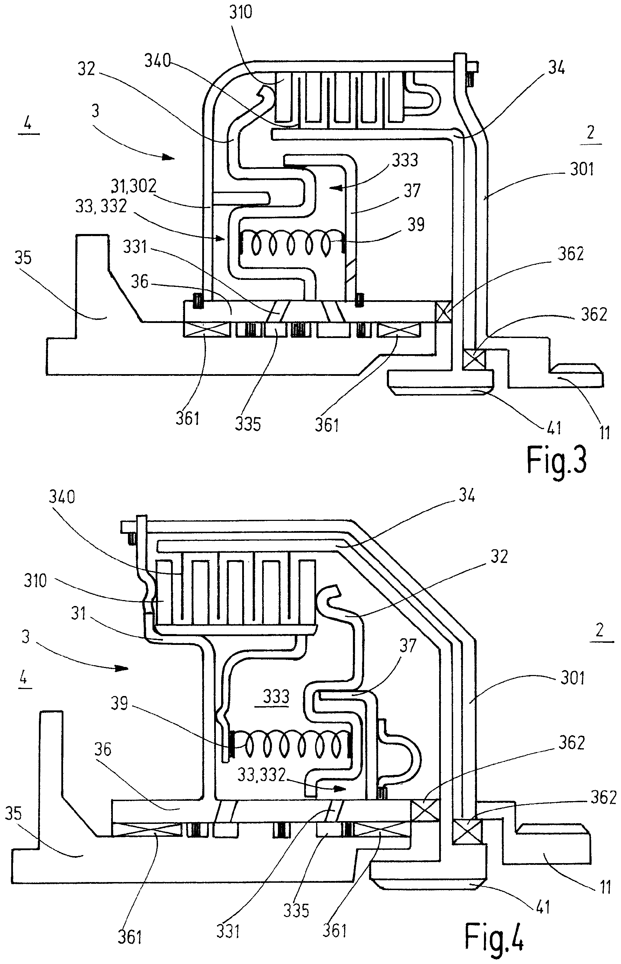

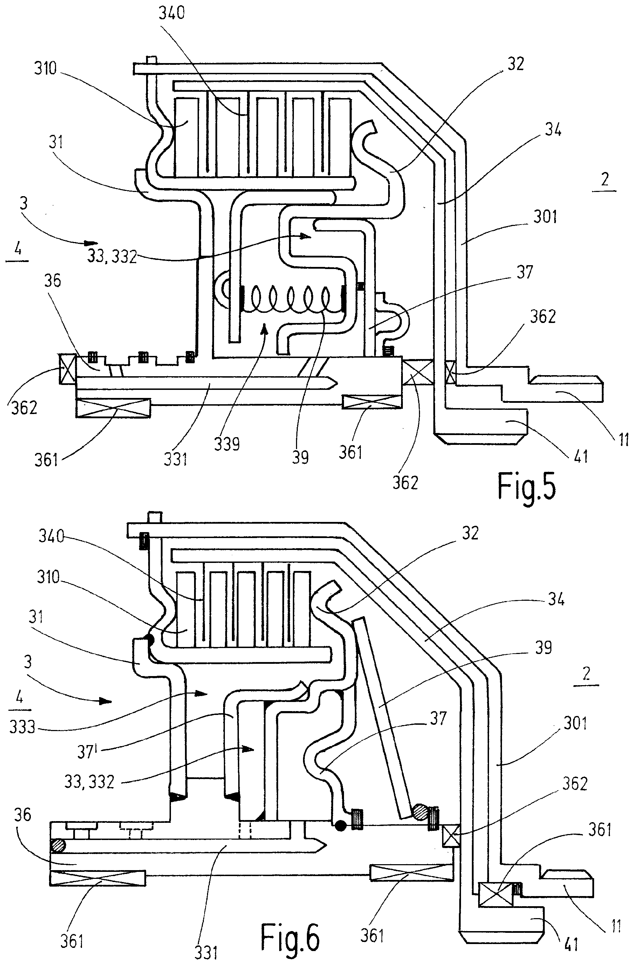

Die Fig. 2 bis 6 zeigen Teile von mehreren Ausführungsformen einer Kupplungseinrichtung 3. Wenn nicht anders erwähnt, sind die Merkmale des Antriebsstranges 5 aus Metall wie Stahl, beispielsweise S420MC, HC300LA, HC340LA. Die Eingangswelle 11 ist über eine Steckverzahnung nach DIN5480 drehfest mit einer Mitnehmerscheibe 301 der Kupplungseinrichtung 3 verbunden. Gemäß der Ausführungsformen nach Fig. 2 und 3 erstreckt sich die Mitnehmerscheibe 301 im Wesentlichen in radialer Richtung zur Drehachse A. Gemäß der Ausführungsformen nach Fig. 4 und 5 erstreckt sich die Mitnehmerscheibe 301 in radialer und axialer Richtung zur Drehachse A. Gemäß der Ausführungsformen nach Fig. 2 und 3 ist die Mitnehmerscheibe 301 über einen Sicherrungsring drehfest mit einem radial äußeren Ende eines Korbes 302 verbunden. Der Korb 302 erstreckt sich korbförmig axial und radial bezüglich der Drehachse A. Mit einem radial inneren Ende ist der Korb 302 drehfest mit einer Drehdurchführung 36 verbunden. Auch diese Verbindung kann als Schweißnaht realisiert sein. Gemäß der Ausführungsformen nach Fig. 4, 5 und 6 weist die Kupplungseinrichtung 3 keinen Korb 302 auf und die Mitnehmerscheibe 301 ist über eine Schweißnaht drehfest mit einem radial äußeren Ende eines Eingangslamellenträgers 31 verbunden.

Gemäß der Ausführungsformen nach Fig. 2 und 3 ist ein Ausgangslamellenträger 34 radial innerhalb der Mitnehmerscheibe 301 und des Korbs 302 angeordnet; und ein Kolben 32 ist radial innerhalb des Korbs 302 angeordnet. Gemäß der Ausführungsformen nach Fig. 4, 5 und 6 ist der Ausgangslamellenträger 34 radial innerhalb der Mitnehmerscheibe 301 angeordnet; und der Kolben 32 ist radial innerhalb des Ausgangslamellenträgers 34 angeordnet.

Gemäß der Ausführungsformen nach Fig. 2, 4, 5 und 6 ist der Eingangslamellenträger 31 radial innerhalb des Ausgangslamellenträgers 34 angeordnet, gemäß der Ausführungsform nach Fig. 3 ist der Ausgangslamellenträger 34 radial innerhalb des Eingangslamellenträgers 31 angeordnet.

Die Drehdurchführung 36 ist im Wesentlichen zylindrisch ausgebildet und koaxial zur Eingangswelle 11 und zur Ausgangswelle 41 angeordnet. Gemäß der Ausführungsformen nach Fig. 2, 3 und 4 ist die Drehdurchführung 36 über zwei radiale Lager 361 wie Nadellager direkt oberhalb einer gehäusefesten Nabe 35 drehbar gelagert. Gemäß der Ausführungsformen nach Fig. 5 und 6 ist die Drehdurchführung 36 über zwei radiale Lager 361 wie Nadellager direkt oberhalb der Ausgangswelle 41 drehbar gelagert. Auch die Nabe 35 ist im Wesentlichen zylindrisch ausgebildet und koaxial zur Eingangswelle 11 und zur Ausgangswelle 41 angeordnet, sie erstreckt sich in axialer Richtung zur Drehachse A zwischen dem Zweimassenschwungrad 2 und dem Handschaltgetriebe 4.

Ein radial inneres Ende des Eingangslamellenträgers 31 ist drehfest mit der Drehdurchführung 36 verbunden. Gemäß der Ausführungsformen nach Fig. 2, 4 und 5 ist der Eingangslamellenträger 31 T-förmig, gemäß der Ausführungsform nach Fig. 3 und 6 ist der Eingangslamellenträger 31 L-förmig. Der Eingangslamellenträger 31 erstreckt sich im Wesentlichen in radialer Richtung zur Drehachse A. Der Eingangslamellenträger 31 trägt mehrere Eingangslamellen 310. Somit ist die Eingangswelle 11 über Mitnehmerscheibe 301, Korb 302 und Drehdurchführung 36 drehfest mit dem Eingangslamellenträger 31 verbunden. Die Ausgangswelle 41 ist drehfest mit einem Ausgangslamellenträger 34 verbunden. Gemäß der Ausführungsformen nach Fig. 2, 3 und 4 ist der Ausgangslamellenträger 34 über axiale Lager 362 wie Nadellager bezüglich der Drehdurchführung 36 und der Mitnehmerscheibe 301 drehbar gelagert. Gemäß der Ausführungsformen nach Fig. 5 und 6 ist der Ausgangslamellenträger 34 über axiale Lager 362 wie Nadellager bezüglich der Drehdurchführung 36 drehbar gelagert. Der Ausgangslamellenträger 34 trägt mehrere Ausgangslamellen 340. Die Eingangslamellen 310 und die Ausgangslamellen 340 sind ringförmig und koaxial zur Eingangswelle 11 und zur Ausgangswelle 41 angeordnet. Die Lamellen bestehen aus unbeschichteten, dicken Stahllamellen und aus mit Reibbelag beschichteten, dünnen Stahllamellen, auch Reiblamellen genannt. Die Reiblamellen haben eine positive bis neutrale Reibcharakteristik. In den Figuren sind Stahllamellen als Rechtecke dargestellt, während Reiblamellen als Striche dargestellt sind. Die Lamellen sind in axialer Richtung zur Drehachse A alternierend in einer Reihe angeordnet Vier Reiblamellen sind zwischen fünf Stahllamellen angeordnet, diese neun Lamellen von Eingangslamellen 310 und Ausgangslamellen 340 bilden ein Lamellenpaket. Die Eingangslamellen 310 und Ausgangslamellen 340 sind in einen Reibschluss bringbar.

Der Kolben 32 steht mit dem Lamellenpaket in Wirkverbindung. Der Kolben 32 erstreckt sich im Wesentlichen in radialer Richtung zur Drehachse A. Ein radial inneres Ende des Kolbens 32 kontaktiert lose die Drehdurchführung 36 und ein radial äußeres Ende des Kolbens 32 ist mit einer Anpresskraft gegen das Lamellenpaket pressbar. Unter einem losen Kontakt im Sinn der Erfindung wird ein mechanischer Kontakt verstanden, bei dem keine reibschlüssige-, formschlüssige-, stoffschlüssige- oder kraftschlüssige Verbindung besteht, Kolbens 32 und Drehdurchführung 36 sind somit beweglich zueinander angeordnet. Dazu ist der Kolben 32 axial verschieblich zur Drehachse A gelagert. Der Kolben 32 ist einfach oder zweifach gelagert. Gemäß der Ausführungsform nach Fig. 2 ist der Kolben 32 zweifach am Korb 302 und am Eingangslamellenträger 31 verschieblich gelagert. Gemäß der Ausführungsform nach Fig. 3 ist der Kolben 32 zweifach am Korb 302 und an einem Träger 37 verschieblich gelagert. Ein inneres Ende des Trägers 37 ist drehfest mit der Drehdurchführung 36 verbunden, der Träger 37 ist L-förmig. Gemäß der Ausführungsform nach Fig. 4 ist der Kolben 32 einfach am Träger 37 verschieblich gelagert. Gemäß der Ausführungsform nach Fig. 5 ist der Kolben 32 zweifach am Eingangslamellenträger 31 und am Träger 37 verschieblich gelagert. Gemäß der Ausführungsform nach Fig. 6 ist der Kolben 32 zweifach an zwei Trägern 37, 37' verschieblich gelagert.

Die Kupplungseinrichtung 3 kann entweder als normalerweise geöffnete oder als normalerweise geschlossene Nassreibkupplung ausgeführt sein. Bei einer normalerweise offenen Nassreibkupplung ist das Lamellenpaket normalerweise nicht im Reibschluss, da der Kolben 32 mittels einer Federanordnung 39 vom Lamellenpaket beabstandet wird und erst mittels einer Pumpenaktuatoranordnung 38 durch das Öl 33 gegen das Lamellenpaket pressbar ist. Die Kupplungseinrichtung 3 gemäß der Ausführungsformen nach Fig. 2, 3, 4 und 5 ist normalerweise offen. Umgekehrt wird bei einer normalerweise geschlossenen Nassreibkupplung der Kolben 32 mittels der Federanordnung 39 normalerweise gegen das Lamellenpaket gepresst und mittels der Pumpenaktuatoranordnung 38 vom Lamellenpaket beabstandet. Die Kupplungseinrichtung 3 gemäß der Ausführungsform nach Fig. 6 ist normalerweise geschlossen.

Die folgende Beschreibung dieses Absatzes gilt für eine normalerweise offene Nassreibkupplung 3 gemäß der Ausführungsformen nach Fig. 2 bis 5 . Bei Beaufschlagung des Lamellenpakets mit Öl 33 wird das radial äußere Ende des Kolbens 32 axial gegen das Lamellenpaket verschoben und mit der Anpresskraft gegen das Lamellenpaket gepresst. Gemäß der Ausführungsformen nach Fig. 2 und 3 wird der Kolben 32 von der linken Seite der Kupplungseinrichtung 3 in Richtung des Handschaltergetriebes 4 gegen das Lamellenpaket gepresst, gemäß der Ausführungsformen nach Fig. 4 und 5 wird der Kolben 32 von der rechten Seite der Kupplungseinrichtung 3 in Richtung des Zweimassenschwungrades 2 gegen das Lamellenpaket gepresst. Der Kolben 32 ist mit einer mechanischen Federkraft der Federanordnung 39 wie einer Schraubendruckfeder vorgespannt. Die Federanordnung 39 ist in einem Fliehölraum 333 angeordnet. Bei Beendigung der Beaufschlagung mit Öl 33 wird der Kolben 32 mit der mechanischen Federkraft axial vom Lamellenpaket weggeschoben.

Das Öl 33 wird über eine Ölzuleitung 331 der Drehdurchführung 36 in einen Ölraum 332 geleitet. Gemäß der Ausführungsformen nach Fig. 2, 3 und 4 kommuniziert die Ölzuleitung 331 mit einer Ölnut 335 in der Nabe 35. Die Ölnut 335 kommuniziert mit einer Ölleitung 383 einer Pumpenaktuatoranordnung 38 der Kupplungseinrichtung 3. Gemäß der Ausführungsformen nach Fig. 5 und 6 kommuniziert die Ölzuleitung 331 direkt mit der Ölleitung 383 der Pumpenaktuatoranordnung 38. Die Ölableitung zurück in ein Ölreservoir 384 ist figürlich nicht dargestellt.

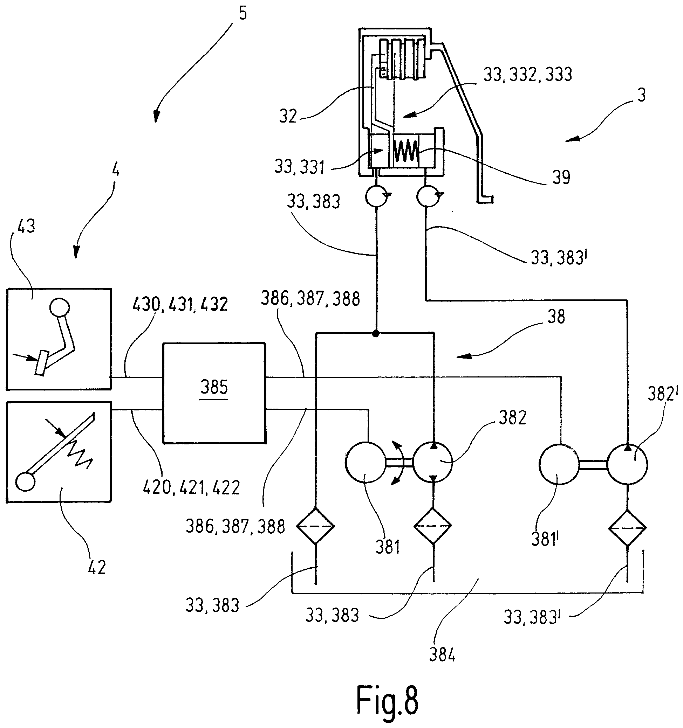

Gemäß Fig. 8 weist die Pumpenaktuatoranordnung 38 zwei Elektromotoren 381, 381' und zwei Ölpumpen 382, 382' auf. Ein Elektromotor 381 und eine Ölpumpe 382 ist für die Beaufschlagung des Lamellenpakets mit Öl 33 vorgesehen. Ein weiterer Elektromotor 381' und eine weitere Ölpumpe 382' ist für eine Kühlung des Lamellenpakets mit Öl 33 vorgesehen. Die Ölpumpe 382 weist zwei Drehrichtungen auf, die weitere Ölpumpe 382' weist eine Drehrichtung auf. Durch den weiteren Elektromotors 381' und die weitere Ölpumpe 382' nur für die Kühlung des Lamellenpakets mit Öl 33, kann die Kühlung bedarfsoptimiert und unabhängig von der Beaufschlagung des Lamellenpakets mit Öl 33 durch die Elektromotor 381 und die Ölpumpe 382 erfolgen. Bei Kenntnis der vorliegenden Erfindung kann der Fachmann auch nur einen Elektromotor 381 und eine Ölpumpe 382 für die Beaufschlagung des Lamellenpakets mit Öl 33 vorsehen. Jedes Paar von Elektromotor 381, 381' und Ölpumpe 382, 382' steht in Wirkverbindung zueinander. Eine Kupplungssteuerung 385 der Kupplungseinrichtung 3 steuert und regelt den Elektromotor 381, 381' mit Steuer- und Regelsignalen, die von der Kupplungssteuerung 385 über eine elektrische Steuerleitung 386 an den Elektromotor 381, 381' übermittelt werden. Zu diesem Zweck weist die Kupplungssteuerung 385 einen Prozessor und einen Datenspeicher auf. Aus dem Datenspeicher wird ein Algorithmus in den Prozessor geladen und ausgeführt. Der ausgeführte Algorithmus steuert und regelt den Elektromotor 381, 381' mit Steuer- und Regelsignalen. Bei Aktivierung des Elektromotors 381, 381' treibt der Elektromotor 381, 381' die Ölpumpe 382, 382' so an, dass die Ölpumpe 382, 382' Öl 33 aus einer Ölleitung 383, 383' ansaugt oder Öl 33 in die Ölleitung 383, 383' ausstößt. Die Ölleitung 383, 383' kommuniziert mit der Ölzuleitung 331. Das Öl 33 wird auf diese Weise zwischen dem Ölreservoir 384 und dem Ölraum 332 hin- und her gepumpt.

Die Kupplungssteuerung 385 ist über eine elektrische Kupplungspedalsignalleitung 420 mit einem Kupplungspedalsensor 42 eines Kupplungspedals des Kraftfahrzeuges verbunden, und die Kupplungssteuerung 385 ist über eine elektrische Gaspedalsignalleitung 430 mit einem Gaspedalsensor 43 eines Gaspedals des Kraftfahrzeuges verbunden. Bei Kenntnis der vorliegenden Erfindung kann der Fachmann auch nur eine elektrische Kupplungspedalsignalleitung 420 zwischen der Kupplungssteuerung 385 und dem Kupplungspedalsensor 42 oder auch nur eine elektrische Gaspedalsignalleitung 430 zwischen der Kupplungssteuerung 385 und dem Gaspedalsensor 43 vorsehen. Sobald der Fahrer das Kupplungspedal mit einer Fußkraft betätigt, gibt der Kupplungspedalsensor 42 ein elektrisches Kupplungspedalsignal 421, 422 aus, das über die elektrische Kupplungspedalsignalleitung 420 an die Kupplungssteuerung 385 übermittelt wird. Die auf das Kupplungspedal wirkende Fußkraft ist in Fig. 8 schematisch mit einem Pfeil dargestellt. Der Kupplungspedalsensor 420 erfasst beispielsweise eine durch eine Fußkraft verursachte elastische Verformung einer am Kupplungspedal angebrachten mechanischen Feder. Die mechanische Feder ist in Fig. 8 schematisch dargestellt. Sobald die elastische Verformung der mechanischen Feder einen vorbestimmten Schwellwert übersteigt, wird vom Kupplungspedalsensor 420 ein positives elektrisches Kupplungspedalsignal 421 ausgegeben. Umgekehrt wird vom Kupplungspedalsensor 420 ein negatives elektrisches Kupplungspedalsignal 422 ausgegeben, sobald der Fahrer die am Kupplungspedal anliegende Fußkraft unter den vorbestimmten Schwellwert reduziert, in diesem Fall wird im Sinne der Erfindung von einer nicht wirkenden Fußkraft gesprochen. Vorzugsweise gibt der Kupplungspedalsensor 420 nur ein positives elektrisches Kupplungspedalsignal 421 und nur ein negatives elektrisches Kupplungspedalsignal 422 aus, er arbeitet also binär. In ähnlicher Weise gibt der Gaspedalsensor 43 ein elektrisches Gaspedalsignal 431, 432 aus, das über die zweite elektrische Signalleitung 430 an die Kupplungssteuerung 385 übermittelt wird, sobald der Fahrer das Gaspedal mit einer Fußkraft betätigt. Auch die auf das Gaspedal wirkende Fußkraft ist in Fig. 8 schematisch mit einem Pfeil dargestellt. Der Gaspedalsensor 430 erfasst beispielsweise eine durch eine Fußkraft verursachte Drehung einer Welle wenn das Gaspedal niedergedrückt wird. Das Gaspedal ist an der Welle drehfest angebracht. Die Welle ist in Fig. 8 schematisch dargestellt. Sobald die Drehung der Welle einen vorbestimmten Schwellwert übersteigt, wird vom Gaspedalsensor 430 ein positives elektrisches Gaspedalsignal 431 ausgegeben. Umgekehrt wird vom Gaspedalsensor 430 ein negatives elektrisches Gaspedalsignal 432 ausgegeben, sobald der Fahrer die am Gaspedal anliegende Fußkraft unter den vorbestimmten Schwellwert reduziert, wenn also keine Fußkraft mehr auf das Gaspedal wirkt. Vorzugsweise gibt der Gaspedalsensor 430 eine Mehrzahl von elektrischen Gaspedalsignalen 431, 432 für eine Mehrzahl von unterschiedlichen Verdrehungen der Welle aus, beispielsweise gibt der Gaspedalsensor 430 dreißig abgestufte elektrische Gaspedalsignale 431, 432 für dreißig unterschiedliche verdrehte Winkelstellungen der Welle aus. Bei Kenntnis der vorliegenden Erfindung kann der Fachmann andere Sensoren zur Erfassung der an einem Kupplungspedal oder an einem Gaspedal anliegenden Fußkraft verwenden.

Für ein an die Kupplungssteuerung 385 übermitteltes positives elektrisches Kupplungspedalsignal 421 erzeugt die Kupplungssteuerung 385 ein negatives elektrisches Aktuatorsignal 388, das über die elektrische Steuerleitung 386 von der Kupplungssteuerung 385 an den Elektromotor 381 übermittelt wird. Für ein an die Kupplungssteuerung 385 übermitteltes negatives elektrisches Kupplungspedalsignal 422 erzeugt die Kupplungssteuerung 385 ein positives elektrisches Aktuatorsignal 387, das über die elektrische Steuerleitung 386 von der Kupplungssteuerung 385 an den Elektromotor 381 übermittelt wird. Für ein an die Kupplungssteuerung 385 übermitteltes positives elektrisches Gaspedalsignal 431 erzeugt die Kupplungssteuerung 385 ein positives elektrisches Aktuatorsignal 387, das über die elektrische Steuerleitung 386 von der Kupplungssteuerung 385 an den Elektromotor 381 übermittelt wird. Für ein an die Kupplungssteuerung 385 übermitteltes negatives elektrisches Gaspedalsignal 432 erzeugt die Kupplungssteuerung 385 ein negatives elektrisches Aktuatorsignal 388, das über die elektrische Steuerleitung 386 von der Kupplungssteuerung 385 an den Elektromotor 381 übermittelt wird. Für ein an den Elektromotor 381 übermitteltes positives elektrisches Aktuatorsignal 387 treibt der Elektromotor 381 die Ölpumpe 382 so an, dass die Eingangslamellen 310 und die Ausgangslamellen 340 im Reibschluss sind. Für ein an den Elektromotor 381 übermitteltes negatives elektrisches Aktuatorsignal 388 treibt der Elektromotor 381 die Ölpumpe 382 so an, dass die Eingangslamellen 310 und die Ausgangslamellen 340 nicht im Reibschluss sind.

Für einen Antriebsstrang 5 mit vorgegebenem Drehmoment von 350Nm weist die Kupplungseinrichtung 3 rund 2-4Liter Öl 33 auf, das Lamellenpaket wird mit einem maximalen Druck von rund 12bar im Ölraum 332 beaufschlagt, der Aufbau des maximalen Drucks im Ölraum 332 benötigt rund 100-200msec und ist wesentlich rascher als der vom Fahrer benötigte Zeitraum, um per Fußkraft das Kupplungspedal oder das Gaspedal zu betätigen, um so durch den Kupplungspedalsensor 420 ein Kupplungspedalsignal 421, 422 oder durch den Gaspedalsensor 430 ein Gaspedalsignal 431, 432 bereitzustellen. Diese beispielhaften Angaben haben eine Toleranz von plus/minus 10%.

Das Zweimassenschwungrad 2 reduziert Drehschwingungen, die von Drehungleichförmigkeiten des Verbrennungsmotors 1 herrühren. Da die Drehschwingungen im Antriebsstrang 5 innerhalb eines relativ großen Betriebsdrehzahlenbereiches resonanzartig auftreten, hat das Zweimassenschwungrad 2 zumeist mehrere, für unterschiedliche Drehmomentbereiche bemessene Federstufen und Reibeinrichtungen. Ein Zweimassenschwungrad ist damit vergleichsweise aufwendig und vielfach auch anfällig für Störungen. Nun wird die Kupplungseinrichtung 3 zur aktiven Schwingungsdämpfung eingesetzt. Dazu werden die Eingangslamellen 310 und die Ausgangslamellen 340 im Schlupf betrieben. Dazu werden für ein negatives elektrisches Aktuatorsignal 388 die Eingangslamellen 310 und die Ausgangslamellen 340 mit einer vordefinierten Menge Öl 33 beaufschlagt, so dass die Eingangslamellen 310 und die Ausgangslamellen 340 zueinander schlupfen. Je nach Antriebsstrang 5 und Drehmomentbereich des Verbrennungsmotors 1 werden über die vordefinierte Menge Öl 33 solche Schlupfdrehzahlen eingestellt, dass die Drehschwingungen isoliert werden. Typische Schlupfdrehzahlen betragen 10 bis 100min⁻¹. Aufgrund der positiven bis neutralen Reibcharakteristik der Reiblamellen lassen sich so Drehschwingungen reduzieren, da sich mit steigender Schlupfdrehzahl auch der Reibschluss des Lamellenpakets erhöht. Angaben zu den vordefinierten Mengen Öl 33 sind beispielsweise in einem Register im Datenspeicher der Kupplungssteuerung 385 gespeichert. Diese Mengen Öl 33 sind für mehrere Drehmomentbereiche des Verbrennungsmotors 1 vordefiniert, dass eine optimale Reduzierung der Drehschwingungen erfolgt. In welchem Drehmomentbereich sich der Verbrennungsmotor 1 augenblicklich befindet, wird der Kupplungssteuerung 385 über eine nicht figürlich dargestellte elektrische Steuerleitung von einem ebenfalls nicht figürlich dargestellten Drehzahlsensor mitgeteilt, beispielsweise übermittelt der Drehzahlsensor in regelmäßigen Zeitabständen Drehzahlsignale der Eingangswelle 41 an die Kupplungssteuerung 385. Ein Algorithmus der Kupplungssteuerung 385 berechnet dann aus den Drehzahlsignalen das augenblickliche Drehmomentbereich des Verbrennungsmotors 1. Somit werden Drehschwingungen sowohl vom Zweimassenschwungrad 2, als auch von der Kupplungseinrichtung 3 reduziert. Dies ermöglicht eine platzsparende und kostengünstige Auslegung des Zweimassenschwungrades 2, wodurch für einen Antriebsstrang 5 mit vorgegebenem Drehmoment, die Kupplungseinrichtung 3 mit Nassreibkupplung im Vergleich zu einer Kupplungseinrichtung mit Trockenreibkupplung einen reduzierten Bauraum in axialer Richtung zur Drehachse A aufweist.

Bei dem Antriebsstrang nach Anspruch 15 ist es bevorzugt, wenn für einen Antriebsstrang 5 mit vorgegebenem Drehmoment, die Kupplungseinrichtung 3 mit Nassreibkupplung im Vergleich zu einer Kupplungseinrichtung mit Trockenreibkupplung eine um rund 85% reduzierte Massenträgheit an der Eingangswelle 11 aufweist; und/oder dass für einen Antriebsstrang 5 mit vorgegebenem Drehmoment, die Kupplungseinrichtung 3 mit Nassreibkupplung im Vergleich zu einer Kupplungseinrichtung mit Trockenreibkupplung eine um rund 60% reduzierte Massenträgheit an der Ausgangswelle 41 aufweist.

Dabei ist es bei einem solchen Antriebsstrang bevorzugt, wenn für einen Antriebsstrang 5 mit vorgegebenem Drehmoment, die Kupplungseinrichtung 3 mit Nassreibkupplung im Vergleich zu einer Kupplungseinrichtung mit Trockenreibkupplung eine um rund 85% reduzierte Summe der Massenträgheit von Eingangswelle 11 und Ausgangswelle 41 aufweist.

Bei jedem der oben genannten Antriebsstränge ist es bevorzugt, wenn für einen Antriebsstrang 5 mit vorgegebenem Drehmoment, die Kupplungseinrichtung 3 mit Nassreibkupplung im Vergleich zu einer Kupplungseinrichtung mit Trockenreibkupplung einen um rund 25% reduzierten Bauraum in radialer Richtung zur Drehachse A aufweist.

Ferner ist es bei jedem der oben genannten Antriebsstränge vorteilhaft, wenn für einen Antriebsstrang 5 mit vorgegebenem Drehmoment, die Kupplungseinrichtung 3 mit Nassreibkupplung im Vergleich zu einer Kupplungseinrichtung mit Trockenreibkupplung einen um rund 20% reduzierten Bauraum in axialer Richtung zur Drehachse A aufweist.

### Bezugszeichenliste

A: Drehachse
1: Verbrennungsmotor
2: Zweimassenschwungrad
3: Kupplungseinrichtung
4: Handschaltgetriebe
5: Antriebsstrang
11: Eingangswelle
31: Eingangslamellenträger
32: Kolben
33: Öl
34: Ausgangslamellenträger
35: Nabe
36: Drehdurchführung
37, 37': Träger
38: Pumpenaktuatoranordnung
39: Federanordnung
41: Ausgangswelle
42: Kupplungspedalsensor
43: Gaspedalsensor
301: Mitnehmerscheibe
302: Korb
310: Eingangslamellen
331: Ölzuleitung
332: Ölraum
333: Ölfliehraum
335: Ölnut
361: radiales Lager
362: axiales Lager
340: Ausgangslamellen
381, 381': Elektromotor
382, 382': Ölpumpe
383, 383': Ölleitung
384: Ölreservoir
385: Kupplungssteuerung
386: elektrische Steuerleitung
387: positives elektrisches Aktuatorsignal
388: negatives elektrisches Aktuatorsignal
420: elektrische Kupplungspedalsignalleitung
421: positives elektrisches Kupplungspedalsignal
422: negatives elektrisches Kupplungspedalsignal
430: elektrische Gaspedalsignalleitung
431: positives elektrisches Gaspedalsignal
432: negatives elektrisches Gaspedalsignal

## Patentansprüche

1. Kupplungseinrichtung (3), die in einem Antriebsstrang (5) zwischen einem Verbrennungsmotor (1) und einem Handschaltgetriebe (4) eines Kraftfahrzeuges angeordnet ist; mit einer Eingangswelle (11), die drehfest mit dem Verbrennungsmotor (1) verbunden ist; mit einer Ausgangswelle (41), die drehfest mit dem Handschaltgetriebe (4) verbunden ist; wobei die Eingangswelle (11) drehfest mit einem Eingangslamellenträger (31) verbunden ist; dass die Ausgangswelle (41) drehfest mit einem Ausgangslamellenträger (34) verbunden ist; dass der Eingangslamellenträger (31) Eingangslamellen (310) trägt; dass der Ausgangslamellenträger (34) Ausgangslamellen (340) trägt; und dass die Eingangslamellen (310) und die Ausgangslamellen (340) mit Öl (33) beaufschlagbar und kühlbar sind, mit einer Federanordnung (39) und einer Pumpenaktuatoranordnung (38), wobei ein Reibschluss der Eingangslamellen (310) und der Ausgangslamellen (340) mittels der Federanordnung (39) aufgehoben wird und mittels der Pumpenaktuatoranordnung (38) hergestellt wird; oder dass ein Reibschluss der Eingangslamellen (310) und der Ausgangslamellen (340) mittels der Federanordnung (39) hergestellt wird und mittels der Pumpenaktuatoranordnung (38) aufgehoben wird, mit einem Kupplungspedalsensor (420) zur Erfassung einer auf ein Kupplungspedal wirkenden Fußkraft, und mit einer Kupplungssteuerung (385), **dadurch gekennzeichnet, dass**, falls von einem Kupplungspedalsensor (420) die auf das Kupplungspedal wirkende Fußkraft erfasst wird, vom Kupplungspedalsensor (420) ein positives elektrisches Kupplungspedalsignal (421) ausgegeben wird; dass das positive elektrische Kupplungspedalsignal (421) an die Kupplungssteuerung (385) übermittelt wird; dass von der Kupplungssteuerung (385) für ein positives elektrisches Kupplungspedalsignal (421) ein negatives elektrisches Aktuatorsignal (388) erzeugt wird; dass das negative elektrische Aktuatorsignal (388) an einen Elektromotor (381) übermittelt wird; und dass vom Elektromotor (381) für ein übermitteltes negatives elektrisches Aktuatorsignal (388) eine Ölpumpe (382) so angetrieben wird, dass die Eingangslamellen (310) und die Ausgangslamellen (340) nicht im Reibschluss sind.

2. Kupplungseinrichtung (3) nach Anspruch 1, **dadurch gekennzeichnet, dass** die Eingangswelle (11) drehfest mit einer Mitnehmerscheibe (301) verbunden ist; und dass der Ausgangslamellenträger (34) radial innerhalb der Mitnehmerscheibe (301) angeordnet ist.

3. Kupplungseinrichtung (3) nach Anspruch 2, **dadurch gekennzeichnet, dass** ein radial inneres Ende des Eingangslamellenträgers (31) drehfest mit einer Drehdurchführung (36) verbunden ist; und dass die Drehdurchführung (36) direkt oberhalb einer gehäusefesten Nabe (35) drehbar gelagert ist oder dass die Drehdurchführung (36) direkt oberhalb der Ausgangswelle (41) drehbar gelagert ist.

4. Kupplungseinrichtung (3) nach Anspruch 1, **dadurch gekennzeichnet, dass** ein radial inneres Ende des Eingangslamellenträgers (31) drehfest mit einer Drehdurchführung (36) verbunden ist; und dass der Eingangslamellenträger (31) radial innerhalb des Ausgangslamellenträgers (34) angeordnet ist.

5. Kupplungseinrichtung (3) nach Anspruch 1, **dadurch gekennzeichnet, dass** die Eingangswelle (11) drehfest mit einer Mitnehmerscheibe (301) verbunden ist; dass die Mitnehmerscheibe (301) drehfest mit einem Korb (302) verbunden ist; und dass der Ausgangslamellenträger (34) radial innerhalb der Mitnehmerscheibe (301) und des Korbs (302) angeordnet ist.

6. Kupplungseinrichtung (3) nach Anspruch 5, **dadurch gekennzeichnet, dass** ein radial inneres Ende des Eingangslamellenträgers (31) drehfest mit einer Drehdurchführung (36) verbunden ist; und dass die Drehdurchführung (36) direkt oberhalb einer gehäusefesten Nabe (35) drehbar gelagert ist.

7. Verfahren zum Betrieb einer Kupplungseinrichtung (3) nach einem der Ansprüche 1 bis 6, wobei ein Reibschluss der Eingangslamellen (310) und der Ausgangslamellen (340) mittels einer Federanordnung (39) aufgehoben wird und mittels einer Pumpenaktuatoranordnung (38) hergestellt wird; oder dass ein Reibschluss der Eingangslamellen (310) und der Ausgangslamellen (340) mittels einer Federanordnung (39) hergestellt wird und mittels einer Pumpenaktuatoranordnung (38) aufgehoben wird, **dadurch gekennzeichnet, dass**, falls von einem Kupplungspedalsensor (420) eine auf ein Kupplungspedal wirkende Fußkraft erfasst wird, vom Kupplungspedalsensor (420) ein positives elektrisches Kupplungspedalsignal (421) ausgegeben wird; dass das positive elektrische Kupplungspedalsignal (421) an eine Kupplungssteuerung (385) übermittelt wird; dass von der Kupplungssteuerung (385) für ein positives elektrisches Kupplungspedalsignal (421) ein negatives elektrisches Aktuatorsignal (388) erzeugt wird; dass das negative elektrische Aktuatorsignal (388) an einen Elektromotor (381) übermittelt wird; und dass vom Elektromotor (381) für ein übermitteltes negatives elektrisches Aktuatorsignal (388) eine Ölpumpe (382) so angetrieben wird, dass die Eingangslamellen (310) und die Ausgangslamellen (340) nicht im Reibschluss sind.

8. Verfahren nach Anspruch 7, **dadurch gekennzeichnet, dass** falls vom Kupplungspedalsensor (420) keine auf das Kupplungspedal wirkende Fußkraft erfasst wird, vom Kupplungspedalsensor (420) ein negatives elektrisches Kupplungspedalsignal (422) ausgegeben wird; dass das negative elektrische Kupplungspedalsignal (422) an die Kupplungssteuerung (385) übermittelt wird; dass von der Kupplungssteuerung (385) für ein negatives elektrisches Kupplungspedalsignal (422) ein positives elektrisches Aktuatorsignal (387) erzeugt wird; dass das positive elektrische Aktuatorsignal (387) an den Elektromotor (381) übermittelt wird; und dass vom Elektromotor (381) für ein übermitteltes positives elektrisches Aktuatorsignal (387) die Ölpumpe (382) so angetrieben wird, dass die Eingangslamellen (310) und die Ausgangslamellen (340) im Reibschluss sind.

9. Verfahren nach einem der Ansprüche 7 oder 8, **dadurch gekennzeichnet, dass** falls von einem Gaspedalsensor (430) eine auf ein Gaspedal wirkende Fußkraft erfasst wird, vom Gaspedalsensor (430) ein positives elektrisches Gaspedalsignal (431) ausgegeben wird; dass das positive elektrische Gaspedalsignal (431) an eine Kupplungssteuerung (385) übermittelt wird; dass von der Kupplungssteuerung (385) für ein positives elektrisches Gaspedalsignal (431) ein positives elektrisches Aktuatorsignal (387) erzeugt wird; dass das positive elektrische Aktuatorsignal (387) an einen Elektromotor (381) übermittelt wird; und dass vom Elektromotor (381) für ein übermitteltes positives elektrisches Aktuatorsignal (387) eine Ölpumpe (382) so angetrieben wird, dass die Eingangslamellen (310) und die Ausgangslamellen (340) im Reibschluss sind.

10. Verfahren nach Anspruch 9, **dadurch gekennzeichnet, dass** falls eine niedrige Gangstufe des Handschaltgetriebes (4) eingelegt ist,) für ein übermitteltes positives elektrisches Aktuatorsignal (387) eine Ölpumpe (382) so angetrieben wird, dass die Eingangslamellen (310) und die Ausgangslamellen (340) im Reibschluss sind und ein Kraftschluss zwischen Verbrennungsmotor (1) und Handschaltgetriebe (4) gebildet wird und das Kraftfahrzeug anfährt.

11. Verfahren nach einem der Ansprüche 9 oder 10, **dadurch gekennzeichnet, dass** falls vom Gaspedalsensor (430) keine auf das Gaspedal wirkende Fußkraft erfasst wird, vom Gaspedalsensor (430) ein negatives elektrisches Gaspedalsignal (431) ausgegeben wird; dass das negative elektrische Gaspedalsignal (431) an die Kupplungssteuerung (385) übermittelt wird; dass von der Kupplungssteuerung (385) für ein negatives elektrisches Gaspedalsignal (431) ein negatives elektrisches Aktuatorsignal (388) erzeugt wird; dass das negative elektrische Aktuatorsignal (388) an den Elektromotor (381) übermittelt wird; und dass vom Elektromotor (381) für ein übermitteltes negatives elektrisches Aktuatorsignal (388) die Ölpumpe (382) so angetrieben wird, dass die Eingangslamellen (310) und die Ausgangsiameilen (340) nicht im Reibschluss sind.

12. Verfahren nach Anspruch 11, **dadurch gekennzeichnet, dass** falls eine Gangstufe des Handschaltgetriebes (4) eingelegt ist, für ein negatives elektrisches Aktuatorsignal (388) die Ölpumpe (382) so angetrieben wird, dass die Eingangslamellen (310) und die Ausgangslamellen (340) nicht im Reibschluss sind und ein Kraftschluss zwischen Verbrennungsmotor (1) und Handschaltgetriebe (4) unterbrochen wird und das Kraftfahrzeug segelt.

13. Verfahren nach einem der Ansprüche 7 bis 12, **dadurch gekennzeichnet, dass** die Eingangslamellen (310) und die Ausgangslamellen (340) mit einer vordefinierten Menge Öl (33) beaufschlagt werden; dass über die Beaufschlagung der Eingangslamellen (310) und der Ausgangslamellen (340) mit einer vordefinierten Menge Öl (33) Schlupfdrehzahlen für einen Schlupf zwischen den Eingangslamellen (310) und den Ausgangslamellen {340) eingestellt werden; und dass mittels der schlupfenden Eingangslamellen (310) und Ausgangslamellen (340) Drehschwingungen isoliert werden.

14. Antriebsstrang (5) eines Kraftfahrzeuges mit einer Kupplungseinrichtung (3) nach einem der Ansprüche 1 bis 6 und/oder zur Durchführung des Verfahrens zum Betrieb einer Kupplungseinrichtung (3) nach einem der Ansprüche 7 bis 13.

## Claims

1. Clutch actuator device (3) which is arranged in a drive train (5) between an internal combustion engine (1) and a manual shift transmission (4) of a motor vehicle; with an input shaft (11) which is connected rotationally secured to the internal combustion engine (1); with an output shaft (41) which is connected rotationally secured to the manual shift transmission (4); wherein the input shaft (11) is connected rotationally secured to an input plate support (31); that the output shaft (41) is connected rotationally secured to an output plate support (34); that the input plate support (31) supports input plates (310); that the output plate support (34) supports output plates (340); and that the input plates (310) and the output plates (340) can be charged and cooled with oil (33), with a spring assembly (39) and a pump actuator arrangement (38), wherein a friction lock-up of the input plates (310) and the output plates (340) is cleared by means of the spring assembly (39) and is produced by means of the pump actuator arrangement (38); or that a friction lock-up of the input plates (310) and the output plates (340) is produced by means of the spring assembly (39) and is cleared by means of the pump actuator arrangement (38), with a clutch pedal sensor (420) for detecting a foot force acting on a clutch pedal, and with a clutch control (385), **characterized in that** if the foot force acting on the clutch pedal is detected by a clutch pedal sensor (420), a positive electric clutch pedal signal (421) is emitted by the clutch pedal sensor (420); that the positive electric clutch pedal signal (421) is transmitted to the clutch control (385); that a negative electric actuator signal (388) is generated by the clutch control (385) for a positive electric clutch pedal signal (421); that the negative electric actuator signal (388) is transmitted to an electric motor (381); and that an oil pump (382) is driven by the electric motor (381) for a transmitted negative electric actuator signal (388) so that the input plates (310) and the output plates (340) are not in friction lock-up.

2. Clutch actuator device (3) according to Claim 1, **characterized in that** the input shaft (11) is connected rotationally secured to a driven plate (301); and that the output plate support (34) is arranged radially inside the driven plate (301).

3. Clutch actuator device (3) according to Claim 2, **characterized in that** a radially inner end of the input plate support (31) is connected rotationally secured to a rotary feedthrough (36); and that the rotary feedthrough (36) is mounted rotatable directly above a hub (35) fixed on the housing or that the rotary feedthrough (36) is mounted rotatable directly above the output shaft (41).

4. Clutch actuator device (3) according to Claim 1, **characterized in that** a radially inner end of the input plate support (31) is connected rotationally secured to a rotary feedthrough (36); and that the input plate support (31) is arranged radially inside the output plate support (34).

5. Clutch actuator device (3) according to Claim 1, **characterized in that** the input shaft (11) is connected rotationally secured to a driven plate (301); that the driven plate (301) is connected rotationally secured to a cage (302); and that the output plate support (34) is arranged radially inside the driven plate (301) and the cage (302).

6. Clutch actuator device (3) according to Claim 5, **characterized in that** a radially inner end of the input plate support (31) is connected rotationally secured to a rotary feedthrough (36); and that the rotary feedthrough (36) is mounted rotatable directly above a hub (35) fixed on the housing.

7. Method for the operation of a clutch actuator device (3) according to one of Claims 1 to 6, wherein a friction lock-up of the input plates (310) and the output plates (340) is cleared by means of a spring assembly (39) and is produced by means of a pump actuator arrangement (38); or that a friction lock-up of the input plates (310) and the output plates (340) is produced by means of a spring assembly (39) and is cleared by means of a pump actuator arrangement (38), **characterized in that** if a foot force acting on a clutch pedal is detected by a clutch pedal sensor (420), a positive electric clutch pedal signal (421) is emitted by the clutch pedal sensor (420); that the positive electric clutch pedal signal (421) is transmitted to a clutch control (385); that a negative electric actuator signal (388) is generated by the clutch control (385) for a positive electric clutch pedal signal (421); that the negative electric actuator signal (388) is transmitted to an electric motor (381); and that an oil pump (382) is driven by the electric motor (381) for a transmitted negative electric actuator signal (388) so that the input plates (310) and the output plates (340) are not in friction lock-up.

8. Method according to Claim 7, **characterized in that** if the clutch pedal sensor (420) does not detect any foot force acting on the clutch pedal, a negative electric clutch pedal signal (422) is emitted by the clutch pedal sensor (420); that the negative electric clutch pedal signal (422) is transmitted to the clutch control (385); that a positive electric actuator signal (387) is generated by the clutch control (385) for a negative electric clutch pedal signal (422); that the positive electric actuator signal (387) is transmitted to the electric motor (381); and that the oil pump (382) is driven by the electric motor (381) for a transmitted positive electric actuator signal (387) so that the input plates (310) and the output plates (340) are in friction lock-up.

9. Method according to either of Claims 7 and 8, **characterized in that** if an accelerator pedal sensor (430) detects a foot force acting on an accelerator pedal, a positive electric accelerator pedal signal (431) is issued by the accelerator pedal sensor (430); that the positive electric accelerator pedal signal (431) is transmitted to a clutch control (385); that a positive electric actuator signal (387) is generated by the clutch control (385) for a positive electric accelerator pedal signal (431); that the positive electric actuator signal (387) is transmitted to an electric motor (381); and that an oil pump (382) is driven by the electric motor (381) for a transmitted positive electric actuator signal (387) so that the input plates (310) and the output plates (340) are in friction lock-up.

10. Method according to Claim 9, **characterized in that** if a low gear stage of the manual shift transmission (4) is engaged, for a transmitted positive electric actuator signal (387) an oil pump (382) is driven so that the input plates (310) and the output plates (340) are in friction lock-up and a force-locking engagement is formed between the internal combustion engine (1) and the manual shift transmission (4) and the motor vehicle moves off.

11. Method according to one of Claims 9 or 10, **characterized in that** if the accelerator pedal sensor (430) does not detect any foot force acting on the accelerator pedal, a negative electric accelerator pedal signal (431) is emitted by the accelerator pedal sensor (430); that the negative electric accelerator pedal signal (431) is transmitted to the clutch control (385); that a negative electric actuator signal (388) is generated by the clutch control (385) for a negative electric accelerator pedal signal (431); that the negative electric actuator signal (388) is transmitted to the electric motor (381); and that the oil pump (382) is driven by the electric motor (381) for a transmitted negative electric actuator signal (388) so that the input plates (310) and the output plates (340) are not in friction lock-up.

12. Method according to Claim 11, **characterized in that** if a gear stage of the manual shift transmission (4) is engaged, the oil pump (382) is driven for a negative electric actuator signal (388) so that the input plates (310) and the output plates (340) are not in friction lock-up and a force-locking engagement between the internal combustion engine (1) and manual shift transmission (4) is interrupted and the motor vehicle coasts.

13. Method according to one of Claims 7 to 12, **characterized in that** the input plates (310) and the output plates (340) are charged with a predefined amount of oil (33); that through the charging of the input plates (310) and the output plates (340) with a predefined amount of oil (33), slip speeds are set for a slip between the input plates (310) and the output plates (340); and that torsional vibrations are isolated by means of the slipping input plates (310) and output plates (340).

14. Drive train (5) of a motor vehicle having a clutch actuator device (3) according to one of Claims 1 to 6 and/or for the implementation of the method for the operation of a clutch actuator device (3) according to one of Claims 7 to 13.

## Revendications

1. Embrayage d'accouplement (3), qui est disposé dans une chaîne cinématique (5) entre un moteur à combustion interne (1) et une boîte de vitesses manuelle (4) d'un véhicule automobile ; avec un arbre d'entrée (11), qui est relié de façon calée en rotation au moteur à combustion interne (1) ; avec un arbre de sortie (41), qui est relié de façon calée en rotation à la boîte de vitesses manuelle (4) ; dans lequel l'arbre d'entrée (11) est relié de façon calée en rotation à un porte-lamelles d'entrée (31) ; que l'arbre de sortie (41) est relié de façon calée en rotation à un porte-lamelles de sortie (34) ; que le porte-lamelles d'entrée (31) porte des lamelles d'entrée (310) ; que le porte-lamelles de sortie (34) porte des lamelles de sortie (340) ; et que les lamelles d'entrée (310) et les lamelles de sortie (340) peuvent être baignées et refroidies avec de l'huile (33), avec un agencement de ressort (39) et un agencement d'actionneur de pompe (38), dans lequel un engagement de friction des lamelles d'entrée (310) et des lamelles de sortie (340) est rompu au moyen de l'agencement de ressort (39) et est établi par l'agencement d'actionneur de pompe (38) ; ou qu'un engagement de friction des lamelles d'entrée (310) et des lamelles de sortie (340) est établi au moyen de l'agencement de ressort (39) et est rompu par l'agencement d'actionneur de pompe (38), avec un détecteur de pédale d'embrayage (420) pour détecter une force de pied agissant sur une pédale d'embrayage, et avec une commande d'embrayage (385), **caractérisé en ce que**, dans le cas où la force de pied agissant sur la pédale d'embrayage est détectée par un détecteur de pédale d'embrayage (420), un signal électrique positif de pédale d'embrayage (421) est émis par le détecteur de pédale d'embrayage (420) ; **en ce que** le signal électrique positif de pédale d'embrayage (421) est transmis à la commande d'embrayage (385) ; **en ce que** pour un signal électrique positif de pédale d'embrayage (421) un signal électrique négatif d'actionneur (388) est produit par la commande d'embrayage (385) ; **en ce que** le signal électrique négatif d'actionneur (388) est transmis à un moteur électrique (381) ; et **en ce que** pour un signal électrique négatif d'actionneur transmis (388) une pompe à huile (382) est entraînée par le moteur électrique (381), de telle manière que les lamelles d'entrée (310) et les lamelles de sortie (340) ne soient pas en engagement de friction.

2. Embrayage d'accouplement (3) selon la revendication 1, **caractérisé en ce que** l'arbre d'entrée (11) est relié de façon calée en rotation à un disque d'entraînement (301); et **en ce que** le porte-lamelles de sortie (34) est disposé radialement à l'intérieur du disque d'entraînement (301).

3. Embrayage d'accouplement (3) selon la revendication 2, **caractérisé en ce qu'**une extrémité radialement intérieure du porte-lamelles d'entrée (31) est assemblée de façon calée en rotation à un passage tournant (36), et **en ce que** le passage tournant (36) est monté de façon rotative directement au-dessus d'un moyeu (35) solidaire du boîtier ou **en ce que** le passage tournant (36) est monté de façon rotative directement au-dessus de l'arbre de sortie (41).

4. Embrayage d'accouplement (3) selon la revendication 1, **caractérisé en ce qu'**une extrémité radialement intérieure du porte-lamelles d'entrée (31) est assemblée de façon calée en rotation à un passage tournant (36), et **en ce que** le porte-lamelles d'entrée (31) est disposé radialement à l'intérieur du porte-lamelles de sortie (34).

5. Embrayage d'accouplement (3) selon la revendication 1, **caractérisé en ce que** l'arbre d'entrée (11) est relié de façon calée en rotation à un disque d'entraînement (301) ; **en ce que** le disque d'entraînement (301) est assemblé de façon calée en rotation à un panier (302) ; et **en ce que** le porte-lamelles de sortie (34) est disposé radialement à l'intérieur du disque d'entraînement (301) et du panier (302).

6. Embrayage d'accouplement (3) selon la revendication 5, **caractérisé en ce qu'**une extrémité radialement intérieure du porte-lamelles d'entrée (31) est assemblée de façon calée en rotation à un passage tournant (36) ; et **en ce que** le passage tournant (36) est monté de façon rotative directement au-dessus d'un moyeu (35) solidaire du boîtier.

7. Procédé de commande d'un embrayage d'accouplement (3) selon l'une quelconque des revendications 1 à 6, dans lequel un engagement de friction des lamelles d'entrée (310) et des lamelles de sortie (340) est rompu au moyen d'un agencement de ressort (39) et établi au moyen d'un agencement d'actionneur de pompe (38) ; ou qu'un engagement de friction des lamelles d'entrée (310) et des lamelles de sortie (340) est établi au moyen d'un agencement de ressort (39) et est rompu au moyen d'un agencement d'actionneur de pompe (38), **caractérisé en ce que**, dans le cas où une force de pied agissant sur une pédale d'embrayage est détectée par un détecteur de pédale d'embrayage (420), un signal électrique positif de pédale d'embrayage (421) est émis par le détecteur de pédale d'embrayage (420) ; **en ce que** le signal électrique positif de pédale d'embrayage (421) est transmis à une commande d'embrayage (385) ; **en ce que**, pour un signal électrique positif de pédale d'embrayage (421), un signal électrique négatif d'actionneur (388) est produit par la commande d'embrayage (385) ; **en ce que** le signal électrique négatif d'actionneur (388) est transmis à un moteur électrique (381) ; et **en ce qu'**une pompe à huile (382) est entraînée par le moteur électrique (381) pour un signal électrique négatif d'actionneur transmis (388), de telle manière que les lamelles d'entrée (310) et les lamelles de sortie (340) ne soient pas en engagement de friction.

8. Procédé selon la revendication 7, **caractérisé en ce que**, dans le cas où aucune force de pied agissant sur la pédale d'embrayage n'est détectée par le détecteur de pédale d'embrayage (420), un signal électrique négatif de pédale d'embrayage (422) est émis par le détecteur de pédale d'embrayage (420) ; **en ce que** le signal électrique négatif de pédale d'embrayage (422) est transmis à la commande d'embrayage (385) ; **en ce que**, pour un signal électrique négatif de pédale d'embrayage (422), un signal électrique positif d'actionneur (387) est produit par la commande d'embrayage (385) ; **en ce que** le signal électrique positif d'actionneur (387) est transmis au moteur électrique (381) ; et **en ce que** la pompe à huile (382) est entraînée par le moteur électrique (381) pour un signal électrique positif d'actionneur transmis (387), de telle manière que les lamelles d'entrée (310) et les lamelles de sortie (340) soient en engagement de friction.

9. Procédé selon une des revendications 7 et 8, **caractérisé en ce que**, dans le cas où une force de pied agissant sur une pédale d'accélérateur est détectée par un détecteur de pédale d'accélérateur (430), un signal électrique positif de pédale d'accélérateur (431) est émis par le détecteur de pédale d'accélérateur (430) ; **en ce que** le signal électrique positif de pédale d'accélérateur (431) est transmis à une commande d'embrayage (385) ; **en ce que**, pour un signal électrique positif de pédale d'accélérateur (431), un signal électrique positif d'actionneur (387) est produit par la commande d'embrayage (385) ; **en ce que** le signal électrique positif d'actionneur (387) est transmis à un moteur électrique (381) ; et **en ce qu'**une pompe à huile (382) est entraînée par le moteur électrique (381) pour un signal électrique positif d'actionneur transmis (387), de telle manière que les lamelles d'entrée (310) et les lamelles de sortie (340) soient en engagement de friction.

10. Procédé selon la revendication 9, **caractérisé en ce que**, dans le cas où un rapport inférieur de la boîte de vitesses manuelle (4) est engagé, une pompe à huile (382) est entraînée pour un signal électrique positif d'actionneur transmis (387), de telle manière que les lamelles d'entrée (310) et les lamelles de sortie (340) soient en engagement de friction et qu'une transmission de force entre le moteur à combustion interne (1) et la boîte de vitesses manuelle (4) soit formée et que le véhicule automobile démarre.

11. Procédé selon une des revendications 9 et 10, **caractérisé en ce que**, dans le cas où aucune force de pied agissant sur la pédale d'accélérateur n'est détectée par le détecteur de pédale d'accélérateur (430), un signal électrique négatif de pédale d'accélérateur (431) est émis par le détecteur de pédale d'accélérateur (430) ; **en ce que** le signal électrique négatif de pédale d'accélérateur (431) est transmis à la commande d'embrayage (385) ; **en ce que**, pour un signal électrique négatif de pédale d'embrayage (431), un signal électrique négatif d'actionneur (388) est produit par la commande d'embrayage (385) ; **en ce que** le signal électrique négatif d'actionneur (388) est transmis au moteur électrique (381) ; et **en ce que** la pompe à huile (382) est entraînée par le moteur électrique (381) pour un signal électrique négatif d'actionneur transmis (388), de telle manière que les lamelles d'entrée (310) et les lamelles de sortie (340) ne soient pas en engagement de friction.

12. Procédé selon la revendication 11, **caractérisé en ce que**, dans le cas où un rapport de la boîte de vitesses manuelle (4) est engagé, la pompe à huile (382) est entraînée pour un signal électrique négatif d'actionneur (388) de telle manière que les lamelles d'entrée (310) et les lamelles de sortie (340) ne soient pas en engagement de friction et qu'une transmission de force entre le moteur à combustion interne (1) et la boîte de vitesses manuelle (4) soit interrompue et que le véhicule automobile se déplace sur sa lancée.

13. Procédé selon l'une quelconque des revendications 7 à 12, **caractérisé en ce que** les lamelles d'entrée (310) et les lamelles de sortie (340) sont baignées avec une quantité d'huile prédéfinie (33) ; **en ce que** des vitesses de rotation de patinage pour un patinage entre les lamelles d'entrée (310) et les lamelles de sortie (340) sont réglées par la fourniture d'une quantité d'huile prédéfinie (33) aux lamelles d'entrée (310) et aux lamelles de sortie (340) ; et **en ce que** des vibrations de rotation sont isolées au moyen du patinage des lamelles d'entrée (310) et des lamelles de sortie (340).

14. Chaîne cinématique (5) d'un véhicule automobile avec un embrayage d'accouplement (3) selon l'une quelconque des revendications 1 à 6 et/ou pour la mise en œuvre du procédé de fonctionnement d'un embrayage d'accouplement (3) selon l'une quelconque des revendications 7 à 13.
